# FASCICULE DE BREVET EUROPEEN

(11) **EP 0 869 693 B1**
(45) Date de publication et mention de la délivrance du brevet: **02.01.2004**
(21) Numéro de dépôt: 98200956.5
(22) Date de dépôt: 26.03.1998
(51) Int. Cl.: H04Q 7/38

(54) **Terminal mobile et procédé d'enregistrement du terminal auprès d'un réseau de télécommunication**
Mobil-Station und Registrierungsverfahren der Station in einem Telekommunikationnetzwerk
Mobile terminal and registration method of said terminal in a telecommunications network

(30) Priorité: 02.04.1997 FR 9704001
(43) Date de publication de la demande: 07.10.1998
(73) Titulaire: Koninklijke Philips Electronics N.V., 5621 BA Eindhoven (NL)
(72) Inventeur: Boucher, Pierre-Hugues, 75008 Paris (FR)
(74) Mandataire: Chaffraix, Jean

(56) Documents cités:
- WO-A-92/15056
- FR-A- 2 669 796
- US-A- 5 179 373

## Description

L'invention concerne un système de télécommunications comportant au moins une partie fixe et un terminal mobile susceptible de fournir un code secret d'authentification à la partie fixe pour être enregistré auprès dudit système, un laps de temps étant associé audit code secret.

L'invention concerne également un terminal téléphonique mobile susceptible d'être enregistré auprès d'un réseau de télécommunications grâce à un code secret d'authentification fourni à une partie fixe dudit réseau, un laps de temps étant associé audit code secret.

L'invention concerne enfin un procédé d'enregistrement, à l'aide d'un code secret d'authentification, d'un terminal mobile auprès d'un réseau de télécommunications comportant au moins une station radio de base, un laps de temps étant associé audit code secret.

L'invention a d'importantes applications dans le domaine des télécommunications radio mobiles, notamment dans le cadre de la norme DECT (de l'anglais Digital Enhanced Cordless Telecommunications). Elle fournit des moyens pour alléger la gestion des différents utilisateurs d'un réseau de téléphonie mobile, par exemple en facilitant leur enregistrement au niveau d'une station radio de base lors d'une souscription (ou abonnement) à un réseau ou à un service particulier d'un réseau.

Le brevet américain US 5077790 décrit un procédé pour enregistrer un terminal portable au niveau d'un réseau de téléphonie sans fil muni d'une unité de contrôle dotée d'une base de données comportant les numéros d'identification des terminaux connus du réseau. Le terminal envoie à une station de base du réseau, une requête préalable d'enregistrement contenant son numéro d'identification. L'unité de contrôle répond favorablement à la requête préalable si le numéro d'identification figure dans sa base de donnée. Ce procédé d'enregistrement des terminaux d'un réseau, par comparaison d'un numéro avec successivement tous les numéros contenus dans une base de donnée est lourde à mettre en oeuvre et à gérer.

Un objet de l'invention est de remédier pour une large part à cet inconvénient et de fournir des moyens simples, faciles à mettre en oeuvre et à maintenir, pour gérer l'identification des différents utilisateurs d'un réseau de téléphonie mobile, par exemple lors de leur abonnement au réseau ou à un service particulier de ce réseau. Pour cela, un système de télécommunications, un terminal mobile et un procédé d'enregistrement d'un terminal auprès d'un réseau de télécommunications tels que définis dans le préambule sont caractérisés en ce que le code secret est unique pour ledit laps de temps associé et valable pour tous les terminaux du système, pour que ledit enregistrement résulte de la fourniture dudit code à une date dépendante dudit laps de temps.

Pendant un laps de temps donné, il existe donc un code d'authentification unique associé à ce laps de temps, valable pour tous les utilisateurs invités à s'abonner dans ce laps de temps. Comme le code secret d'authentification, ce laps de temps peut être communiqué discrètement (par exemple par courrier ou oralement), à l'utilisateur du terminal désirant notamment s'abonner au réseau, pour qu'il compose son code secret, par exemple à une date comprise dans ce laps de temps. Ainsi, l'unité de contrôle du réseau n'a qu'à vérifier que le code fourni à un instant donné (ou date) à une station radio de base du réseau est égal au code exigé à cet instant.

Le brevet américain publié sous le numéro US5179373 décrit un système de télécommunications du genre déjà mentionné dans lequel le code secret identifie un terminal unique qui n'est donc pas valable pour tous les terminaux du système.

Par ailleurs, l'invention a l'avantage de présenter une parfaite compatibilité avec la norme de téléphonie mobile DECT. En effet, lorsque ledit système, ledit terminal et ledit procédé d'enregistrement tels que définis ci-dessus sont compatibles avec la recommandation ETSI 300175-5 (appelée norme DECT dans la suite de la description), il sont caractérisés en ce que le code secret est utilisé comme AC (Authentication Code) dans la procédure appelée "Key allocation" définie dans ladite norme, au paragraphe 13.6 de la seconde édition datée de janvier 1995.

Un autre objet de l'invention est de prévoir des moyens de gestion des utilisateurs d'un réseau de téléphonie notamment, pour éviter à une unité de contrôle du réseau de vérifier dans une base de données que le code d'authentification fourni, par exemple manuellement par l'utilisateur, correspond bien à celui associé à son numéro d'équipement (numéro de série du terminal mobile) fourni automatiquement à la station de base lors de la requête d'enregistrement.

Pour cela, un système de télécommunications, un terminal mobile et un procédé d'enregistrement tels que déjà définis, le terminal étant doté d'un numéro d'identification ou numéro de série, notamment un IPEI (de l'anglais International Portable Equipment Identity) selon la norme DECT, sont caractérisés en ce que ledit code secret est indépendant de l'IPEI du terminal.

La description suivante, faite en regard des dessins ci-annexés, le tout donné à titre d'exemple non limitatif fera bien comprendre comment l'invention peut être réalisée.

La figure 1 représente un exemple de système de télécommunications selon l'invention.

La figure 2 est un schéma illustrant une méthode connue d'enregistrement d'un terminal mobile au niveau d'un réseau de téléphonie sans fil.

La figure 3 est un schéma illustrant l'invention appliquée à la procédure appelée "Key allocation" définie dans la norme DECT.

La figure 4 est un organigramme d'un exemple de procédé d'enregistrement selon l'invention.

Différents modes de réalisation de l'invention vont maintenant être décrits dans le cadre de la norme de téléphonie mobile DECT définie par l'ETSI (European Telecommunications Standards Institute). L'invention est cependant applicable à tout autre système de télécommunications doté d'une procédure d'authentification des utilisateurs lors de leur enregistrement auprès d'un réseau (CT2, ETACS, TETRA, GSM, etc.), notamment pour souscrire un abonnement.

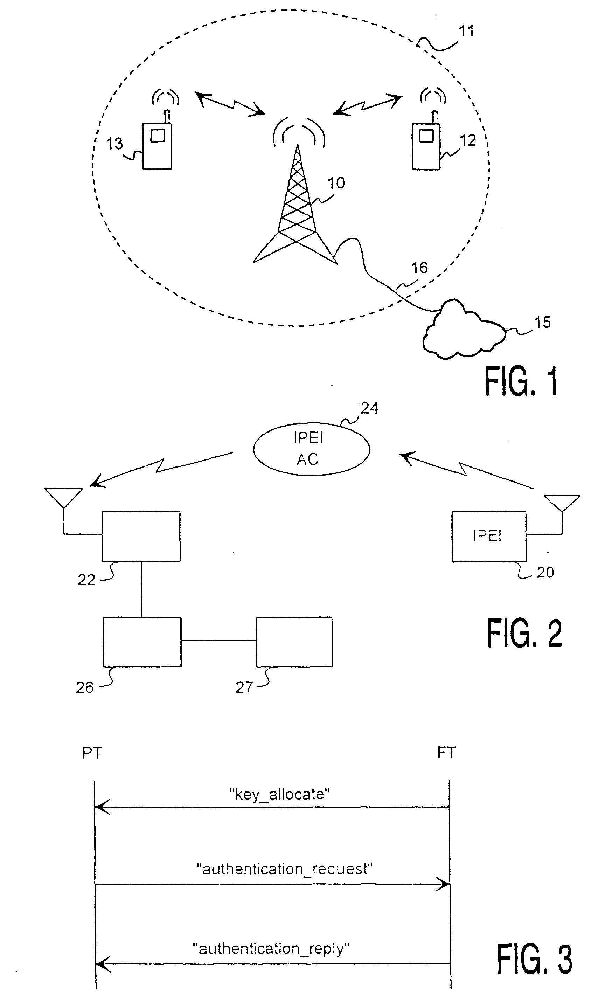

Le système de la figure 1 comporte une station radio de base 10 ayant une zone de couverture 11 à l'intérieur de laquelle deux terminaux 12 et 13 peuvent se déplacer tout en étant en liaison radio avec la station de base 10. Celle-ci est reliée au réseau téléphonique commuté public 15 par un câble 16.

D'autres exemples de systèmes de télécommunications sont décrits dans l'article "The complete solution for cordless access" paru dans la revue "Philips Telecommunication Review" volume 52, n°3, janvier 1995.

L'invention porte notamment sur une procédure d'enregistrement de terminaux radio mobiles auprès d'un réseau de télécommunications. Lors du premier enregistrement d'un terminal par une station de base, par exemple après achat de l'équipement et souscription d'un abonnement à un opérateur de téléphonie mobile, l'utilisateur doit prouver son identité en communiquant un message d'authentification à la station de base.

La norme DECT prévoit une procédure appelée "Key allocation" pour authentifier un utilisateur lors de son premier enregistrement au niveau d'un réseau. En revanche, chaque opérateur de téléphonie mobile doit définir avec les constructeurs de téléphones portables, une méthode de calcul des codes secrets d'authentification des abonnés ainsi qu'une méthode de gestion des bases de données contenant ces codes.

Une méthode connue de souscription d'un terminal mobile à un réseau de télécommunications est décrite schématiquement à la figure 2. Chaque terminal mobile 20 possède un numéro d'identification unique, comparable à un numéro de série, appelé IPEI dans la norme DECT. La station de base 22, reçoit une requête d'enregistrement 24 de la part du terminal 20. Cette requête fournit à la station de base 22 le numéro d'IPEI destiné à identifier l'équipement terminal (notamment pour vérifier qu'il ne s'agit pas d'un appareil volé) et un code secret AC destiné à identifier l'utilisateur abonné.

Une unité de contrôle 26 vérifie dans une base de données 27 contenant la liste de tous les codes AC des abonnés ainsi que des numéros d'IPEI correspondant, que le code AC fourni figure dans la liste, associé à l'IPEI reçu. Si tel est le cas, la station de base 22 pourra procéder à l'enregistrement du terminal 20.

Cette procédure d'enregistrement implique de gérer une longue liste de numéros et d'effectuer de nombreux tests de comparaison à cause de la dépendance entre l'AC et l'IPEI du terminal. Pour alléger cette procédure et éviter les accès multiples à la base de donnée du réseau, une solution consiste à rendre l'AC indépendant de l'IPEI, selon une méthode originale associant un laps de temps au code AC.

La figure 3 schématise une étape de la procédure de souscription selon l'invention, d'un terminal mobile PT à un réseau de télécommunications via une station radio de base FT, cette étape étant réalisée par la procédure appelée "Key allocation" définie dans la norme DECT.

Le FT envoie au PT un message du type "key_allocate" contenant entre autres le numéro (ou type) d'AC à utiliser. En effet, selon les réseaux ou la souscription concernée, il existe un type d'AC approprié. Le PT répond au FT par une requête du type "authentication_request" contenant un résultat de calcul RES1 obtenu à partir de son AC : AC₁. A la réception du message "authentication_request", le FT effectue le même calcul que le PT en utilisant le code AC attendu, AC₂, et obtient un résultat XRES1. L'authentification du PT est réalisée si RES1 = XRES1. Dans ce cas, le PT doit a son tour être authentifié du FT. Pour cela, il envoie au FT un message du type "authentication_reply" contenant un résultat de calcul RES2. A la réception de ce message, le PT effectue le même calcul et obtient un résultat XRES2. L'authentification du FT est réalisée si RES2 = XRES2.

Les résultats d'authentification RES1, XRES1, RES2 et XRES2 sont calculés conformément à la recommandation ETS 300175-7. Le code AC est combiné avec d'autres données générées aléatoirement avant d'être appliqué à une unité de calcul d'un algorithme d'authentification appelé DSAA (de l'anglais DECT Standard Authentication Algorithm) pour donner les résultats de calcul mentionnés ci-dessus.

Selon le mode de réalisation préféré de l'invention, le code AC associé à un laps de temps, est destiné à être communiqué à la station de base, à un instant (ou date) compris dans ledit laps de temps. Celui-ci doit bien-sûr être suffisamment long pour permettre à un utilisateur d'effectuer la procédure de souscription.

Ainsi, le code AC₂ attendu par la station de base et utilisé pour calculer XRES1 et RES2 correspond au code AC actuel, valable pour tous les utilisateurs invités à se souscrire à une date comprise dans le laps de temps pendant lequel a lieu la présente procédure.

Si la double authentification entre le PT et le FT est validée, le contrôleur de réseau conclue que AC₁ = AC₂ et donc que le code fourni est bien celui attendu. L'enregistrement du terminal pourra alors être accepté. Sinon il sera refusé.

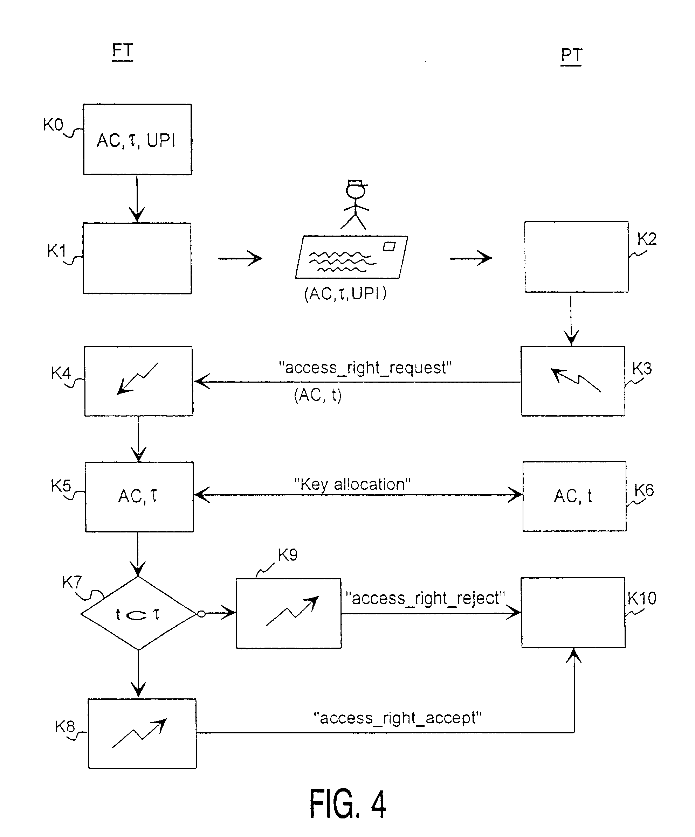

L'organigramme de la figure 4 décrit le procédé complet de souscription d'un terminal mobile à un réseau de télécommunications conforme à la norme DECT, selon le mode de réalisation préféré de l'invention :
- à la case K0, la station de base FT détermine l'AC, son laps de temps τ associé ainsi qu'un numéro personnel d'identification UPI (de l'anglais User Personal Identity) qui sera utilisé en paramètre dans de nombreux types de messages,
- à la case K1, les données précédemment déterminées sont adressées à l'utilisateur du terminal mobile PT sous forme de courrier,
- à la case K2, le PT reçoit le courrier contenant son AC et son UPI,
- à la case K3, le PT prépare une demande de souscription qu'il transmet par voie radio à la station de base FT dans un message du type "access_right_request" contenant entre autres son AC,
- à la case K4, la base FT reçoit la demande de souscription du terminal et enregistre la date t de réception du message (éventuellement à la seconde près),
- aux cases K5 et K6 le mobile et la station de base s'échangent les différents messages de la procédure de type "Key allocation" ; en particulier, il est vérifié que le code AC fourni est bien celui exigé pour la date de réception t enregistrée,
- à la case K7 (t ⊂ τ), le résultat de l'étape précédente est testé si t est inclus dans le laps de temps τ accordé au code AC fourni, le résultat est positif et le procédé continue à la case K8, sinon il passe à la case K9,
- à la case K8, le résultat étant positif, la station de base accepte la souscription du terminal mobile en lui envoyant un message du type "access_right_accept",
- à la case K9, le résultat étant négatif, la station de base rejette la souscription du terminal mobile en lui envoyant un message du type "access_right_reject".
- à la case K10, la procédure de souscription est terminée.

L'invention n'est pas limitée aux modes de réalisations décrits à titre d'exemples. Des variantes apparaîtront à l'homme ou la femme de l'art, en particulier en ce qui concerne la méthode de détermination des codes d'authentification des utilisateurs (AC) et des laps de temps associés. En effet, un même code pourrait être associé à plusieurs laps de temps à l'intérieur d'une même journée ou de journées distinctes ; l'essentiel étant que la probabilité qu'un utilisateur compose par hasard le bon code AC dans le bon laps de temps soit suffisamment faible. On peut par exemple prévoir des méthodes de calcul aléatoire pour associer des codes à des laps de temps, ces variantes de réalisation ne sortant pas du cadre de l'invention.

## Revendications

1. Terminal téléphonique mobile (12,13) susceptible d'être enregistré auprès d'un réseau de télécommunications grâce à un code secret d'authentification fourni à une partie fixe (10) dudit réseau, un laps de temps (τ) étant associé audit code secret, le terminal étant **caractérisé en ce que** le code secret est unique pour ledit laps de temps associé et valable pour tous les terminaux (12,13) du réseau, pour que ledit enregistrement résulte de la fourniture dudit code à une date (t) dépendante dudit laps de temps.

2. Terminal selon la revendication 1, destiné à fonctionner conformément à la norme ETSI 300175-5, **caractérisé en ce que** le code secret est utilisé comme AC (Authentication Code) dans la procédure "Key allocation" définie dans ladite norme.

3. Terminal selon l'une des revendications 1 ou 2 doté d'un numéro d'identification, notamment un IPEI (de l'anglais International Portable Equipment Identity), **caractérisé en ce que** le code secret est indépendant de l'IPEI du terminal.

4. Système de télécommunications comportant au moins une partie fixe et un terminal mobile selon l'une des revendications 1 à 3.

5. Procédé d'enregistrement, à l'aide d'un code secret d'authentification, d'un terminal mobile auprès d'un réseau de télécommunications comportant au moins une station radio de base, un laps de temps étant associé audit code secret, **caractérisé en ce que** le code secret est unique pour ledit laps de temps associé et valable pour tous les terminaux du réseau, pour que ledit enregistrement résulte de la fourniture dudit code à la station radio de base à une date dépendante dudit laps de temps.

6. Procédé selon la revendication 5, d'enregistrement d'un terminal mobile à un réseau de télécommunications destiné à fonctionner conformément à la norme ETSI 300175-5, **caractérisé en ce que** le code secret est utilisé comme AC (Authentication Code) dans la procédure "Key allocation" définie dans ladite norme.

7. Procédé selon l'une des revendications 5 ou 6, le terminal mobile étant doté d'un numéro d'identification, notamment un IPEI (de l'anglais International Portable Equipment Identity), **caractérisé en ce que** le code secret est indépendant de l'IPEI du terminal.

## Claims

1. A mobile telephone terminal (12, 13) to be registered in a telecommunications network with a secret authentication code fed to a fixed part (10) of said network, a period of time (τ) being allocated to said secret code, the terminal being **characterized in that** the secret code is unique for said allocated period of time and valid for all the terminals (12, 13) of the network, so that said registration results in the production of said code at a date (t) that depends on said period of time.

2. A terminal as claimed in claim 1, intended to operate in conformity with the ETSI 300175-5 standard, **characterized in that** the secret code is used as an Authentication Code (AC) in the Key allocation procedure defined in said standard.

3. A terminal as claimed in one of the claims 1 or 2, provided with an identification number, notably an IPEI (International Portable Equipment Identity), **characterized in that** the secret code is independent of the IPEI of the terminal.

4. A telecommunications system comprising at least a fixed part and a mobile terminal as claimed in one of the claims 1 to 3.

5. A registration method for registering with a secret authentication code a mobile terminal with a telecommunications network that comprises at least a radio base station, a period of time being allocated to said secret code, **characterized in that** the secret code is unique for said allocated period of time and valid for all the terminals of the network, so that said registration results in the feeding of said code to the radio base station at a date that depends on said period of time.

6. A method as claimed in claim 5 for registration of a mobile terminal with a telecommunications network intended to operate in conformity with the ETSI 300175-5 standard, **characterized in that** the secret code is used as an AC (Authentication Code) in the Key Allocation procedure defined in said standard.

7. A method as claimed in one of the claims 5 or 6, in which the mobile terminal has an identification number, notably an IPEI (International Portable Equipment Identity), **characterized in that** the secret code is independent of the EPEI of the terminal.

## Patentansprüche

1. Mobile Fernsprech-Station (12, 13), die in einem Telekommunikationsnetzwerk mit einem Identifizierungskode, der an einen festen Teil (10) des besagten Netzwerks übermittelt wird, registriert werden kann, wobei dem besagten Geheimkode eine Zeitspanne (τ) zugeordnet wird und die Station **dadurch gekennzeichnet ist, dass** der Geheimkode für die besagte zugeordnete Zeitspanne einzig und für alle Stationen (12, 13) des Netzwerks gültig ist, damit die besagte Registrierung mit der Übersendung des besagten Kodes an einem von der besagten Zeitspanne abhängigen Datum (t) stattfindet.

2. Station nach Anspruch 1, dafür bestimmt, entsprechend der ETSI-Norm 300375-5 zu arbeiten, **dadurch gekennzeichnet, dass** der Geheimkode als AC (Authentication Code) in dem von der besagten Norm definierten Verfahren der "Key allocation" verwendet wird.

3. Station nach einem der Ansprüche 1 oder 2, versehen mit einer Identifizierungsnummer, insbesondere einer IPEI (aus dem Englischen International Portable Equipment Identity), **dadurch gekennzeichnet, dass** der Geheimkode von der IPEI der Station unabhängig ist.

4. Telekommunikationssystem mit mindestens einem festen Teil und einem mobilen Teil nach einem der Ansprüche 1 bis 3.

5. Registrierungsverfahren mit einem geheimen Identifizierungskode für eine Mobil-Station in einem Telekommunikationsnetzwerk mit mindestens einer Basis-Funkstation, wobei dem besagten Geheimkode eine Zeitspanne zugeordnet wird, **dadurch gekennzeichnet, dass** der Geheimkode für die besagte zugeordnete Zeitspanne einzig und für alle Stationen des Netzwerks gültig ist, damit die besagte Registrierung mit der Übersendung des besagten Kodes an einem von der besagten Zeitspanne abhängigen Datum (t) stattfindet.

6. Verfahren nach Anspruch 5 zur Registrierung einer Mobil-Station in einem Telekommunikationsnetzwerk, dafür bestimmt, entsprechend der ETSI-Norm 300375-5 zu arbeiten, **dadurch gekennzeichnet, dass** der Geheimkode als AC (Authentication Code) in dem von der besagten Norm definierten Verfahren der "Key allocation" verwendet wird.

7. Verfahren nach einem der Ansprüche 5 oder 6, wobei die Mobil-Station mit einer Identifizierungsnummer versehen ist, insbesondere einer IPEI (aus dem Englischen International Portable Equipment Identity), **dadurch gekennzeichnet, dass** der Geheimkode von der IPEI der Station unabhängig ist.
